# EUROPEAN PATENT APPLICATION

(11) **EP 4 822 509 A1**
(43) Date of publication of application: **14.10.2026**
(21) Application number: 26170214.6
(22) Date of filing: 01.04.2026
(51) Int. Cl.: G06F 3/12

(54) **INFORMATION PROCESSING APPARATUS, INFORMATION PROCESSING METHOD, PROGRAM, AND STORAGE MEDIUM**

(30) Priority: 08.04.2025 JP 2025063916
(71) Applicant: Canon Kabushiki Kaisha, Tokyo 146-8501 (JP)
(72) Inventor: KOHATA, Toru, Tokyo (JP)
(74) Representative: WESER & Kollegen Patentanwälte PartmbB

(57) **Abstract**

Provided is an information processing apparatus (100) for controlling a printing apparatus (10), the information processing apparatus including: a registration unit (223) that is capable of registering the printing apparatus in the information processing apparatus without performing communication for obtaining specification information indicating a specification of the printing apparatus; a first control unit (222) that perform control to issue a request to obtain the specification information on the printing apparatus in response to receiving a response to a print job transmitted to the printing apparatus; and a second control unit (222) that perform control to update a specification description file (203) based on the specification information obtained in response to the obtaining request to thereby reflect the specification information in an advanced print setting screen (400) for creating a print job on the information processing apparatus, the specification description file being a file for describing the specification information.

## Description

### TECHNICAL FIELD

The present disclosure relates to an information processing apparatus, an information processing method, a program, and a storage medium.

### BACKGROUND

Information processing apparatuses such as personal computers (PCs) use a printer driver as software for controlling a printing apparatus. It is known that the printer driver refers to a PostScript (registered trademark) Printer Description (PPD) file in which specification information indicating the specifications of the printing apparatus is described. The printer driver reflects the functions of the printing apparatus defined in the PPD file in an advanced print setting screen for configuring the print settings for a printing target file on the information processing apparatus.

Japanese Patent Laid-Open No. 2015-125511 discloses a technique in which a client PC obtains the latest printing environment information on a printer via a server PC after installation of a printer driver.

### SUMMARY

There is a demand for a technique for appropriately reflecting specification information on a printing apparatus in an information processing apparatus.

The present disclosure in its first aspect provides an information processing apparatus as specified in claim 1. Optional features are specified in claim 2 to 14.

The present disclosure in its second aspect provides an information processing method as specified in claim 15.

The present disclosure in its third aspect provides a program as specified in claim 16.

The present disclosure in its fourth aspect provides a storage medium as specified in claim 17.

According to the present disclosure, it is possible to appropriately reflect specification information on a printing apparatus in an information processing apparatus.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of hardware configurations of an information processing apparatus and a printing apparatus;
Fig. 2 is a diagram illustrating an example of a software configuration of the information processing apparatus;
Figs. 3A and 3B are diagrams illustrating examples of part of a PPD file;
Figs. 4A and 4B are diagrams illustrating examples of an advanced print setting window;
Fig. 5 is a sequence chart illustrating an example of a procedure for registering the printing apparatus in the information processing apparatus;
Fig. 6 is a diagram illustrating an example of a connection setting dialog;
Fig. 7 is a flowchart illustrating an example of operation of a printer registration component in a case of registering the printing apparatus in the information processing apparatus;
Fig. 8 is a sequence chart illustrating an example of a method of obtaining extended specification information;
Fig. 9 is a flowchart illustrating an example of operation of a print setting control component in the method of obtaining extended specification information;
Fig. 10 is a diagram illustrating an example of part of a specification information request;
Fig. 11 is a diagram illustrating an example of part of a response to the specification information request;
Fig. 12 is a sequence chart illustrating an example of a method of obtaining extended specification information; and
Fig. 13 is a flowchart illustrating an example of operation of a print setting control component in the method of obtaining extended specification information.

### DESCRIPTION OF THE EMBODIMENTS

Embodiments of the present invention will be specifically described below with reference to the accompanying drawings. Note that the following embodiments do not limit the present invention according to the claims, and not all the combinations of the features described in the embodiments are necessarily essential for the solution to be provided by the present invention. Note that identical constituent elements are denoted by the same reference numeral.

### <<First Embodiment>>

### <Overview>

In the present embodiment, an example in which an information processing apparatus obtains specification information on a printing apparatus after installation of a printer driver on the information processing apparatus will be described. As described earlier, information processing apparatuses such as PCs use a printer driver as software for controlling a printing apparatus. It is known that the printer driver refers to a PPD file in which specification information indicating the specifications of the printing apparatus is described. The printer driver reflects the functions of the printing apparatus defined in the PPD file in an advanced print setting screen for creating a print job on the information processing apparatus.

As described earlier, the specification information is written to the PPD file during the installation of the printer driver. Here, part of the specification information is obtained by communication with the printing apparatus, and the rest is written to the PPD file without performing communication with the printing apparatus.

Incidentally, a connection setting dialog for setting whether to permit a local area network (LAN) connection between the information processing apparatus and the printing apparatus may be displayed during the installation of the printer driver depending on the operating system (OS) of the information processing apparatus. The connection setting dialog is displayed in a situation where the information processing apparatus and the printing apparatus are connected via a network. In a case where a LAN connection is not permitted on the connection setting dialog, Hypertext Transfer Protocol (HTTP) communication cannot be performed with the printing apparatus, making it impossible to obtain the part of the specification information to be obtained from the printing apparatus. This prevents some of the functions of the printing apparatus from being written to the PPD file and reflected in the advanced print setting screen, and thereby keeps the user from fully utilizing the functions of the printing apparatus. For this reason, it is necessary to obtain the specification information from the printing apparatus after the installation of the printer driver and write it to the PPD file.

Also, the specification information may be changed or other specification information may be added due to a setting change made to the printing apparatus or the like. In order to write the latest specification information on the printing apparatus to the PPD file and reflect it in the advanced print setting window, it is also necessary to obtain the specification information from the printing apparatus after the installation of the printer driver.

To address this, in the present embodiment, after the installation of the printer driver, the information processing apparatus transmits a request to obtain the specification information to the printing apparatus subsequent to transmission of a print job to the printing apparatus. The information processing apparatus obtains the specification information from the printing apparatus and writes it to the PPD file in a case where a print job is transmitted, which is a timing at which the information processing apparatus is certainly able to communicate with the printing apparatus. By doing so, the functions of the printing apparatus are reflected in the advanced print setting screen, thus allowing the user to fully utilize the functions of the printing apparatus.

### <Configurations>

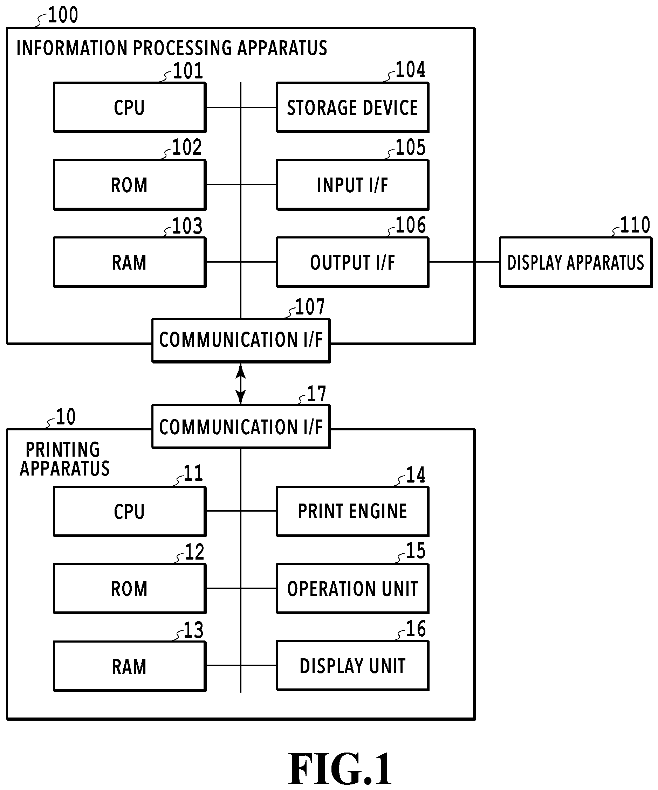

Fig. 1 is a diagram illustrating an example of hardware configurations of an information processing apparatus and a printing apparatus. An information processing apparatus 100 is a PC, for example. A printing apparatus 10 is an apparatus communicably connected to the information processing apparatus 100 and capable of receiving a print instruction from the information processing apparatus 100 and performing printing. The printing apparatus 10 is a printer or a multi-function peripheral (MFP), for example. The information processing apparatus 100 and the printing apparatus 10 are connected to each other through a network, such as a wireless LAN or a wired LAN. Note that multiple printing apparatuses 10 may be connected to the information processing apparatus 100.

The information processing apparatus 100 includes a central processing unit (CPU) 101, a read-only memory (ROM) 102, a random-access memory (RAM) 103, a storage device 104, an input interface (I/F) 105, an output I/F 106, and a communication I/F 107.

The CPU 101 is a central processing unit that controls internal devices of the information processing apparatus 100 and executes various software processes. The CPU 101 executes the programs of a standard printing module 210 and a printer driver 220 to be described later and the like. The ROM 102 is a read-only storage device and stores basic software for controlling the information processing apparatus 100 and the like. The RAM 103 functions as an area to load the programs to be executed by the CPU 101 or an area to temporarily store work data of a program being executed. The storage device 104 stores an OS, application software, the standard printing module 210 and the printer driver 220 to be described later, and the like. The storage device 104 is a hard disk drive (HDD) or a solid state drive (SSD), for example. The input I/F 105 inputs signals from an external apparatus into the information processing apparatus 100. An input apparatus for converting a user input into a signal may be connected to the input I/F 105 and used. The output I/F 106 sends signals and data to an external apparatus from the information processing apparatus 100. An output apparatus for outputting signals from the information processing apparatus 100 may be connected to the output I/F 106 and used. In the embodiment illustrated in Fig. 1, a display apparatus 110 is connected to the output I/F 106 as an output apparatus for visually outputting data from the information processing apparatus 100. The display apparatus 110 may be included in the information processing apparatus 100 like the display of a laptop PC, for example. The communication I/F 107 transmits and receives data between an external apparatus, such as the printing apparatus 10, and the information processing apparatus 100.

The printing apparatus 10 includes a CPU 11, a ROM 12, a RAM 13, a print engine 14, an operation unit 15, a display unit 16, and a communication I/F 17.

The CPU 11 is a central processing unit that controls internal devices of the printing apparatus 10 and executes various software processes. The ROM 12 is a read-only storage device and stores basic software for controlling the printing apparatus 10 and the like. The RAM 13 functions as an area to load the programs to be executed by the CPU 11 or an area to temporarily store work data of a program being executed. The print engine 14 is a main mechanism for performing printing on a print medium. In a case where the printing apparatus 10 receives a print job transmitted from the information processing apparatus 100, the print engine 14 draws in a print medium placed at a sheet feeding port not illustrated and performs printing thereon. The operation unit 15 is an input device for accepting various instructing operations for the printing apparatus 10 from the user, and is hardware keys, such as a power button, for example. The display unit 16 is an output device for displaying images and various pieces of information, and is a liquid crystal monitor, for example. The operation unit 15 and the display unit 16 may be integrally configured as a touch panel. The communication I/F 17 transmits and receives data between the printing apparatus 10 and the information processing apparatus 100. Incidentally, the printing apparatus 10 may include a secondary storage device, such as an HDD or an SSD.

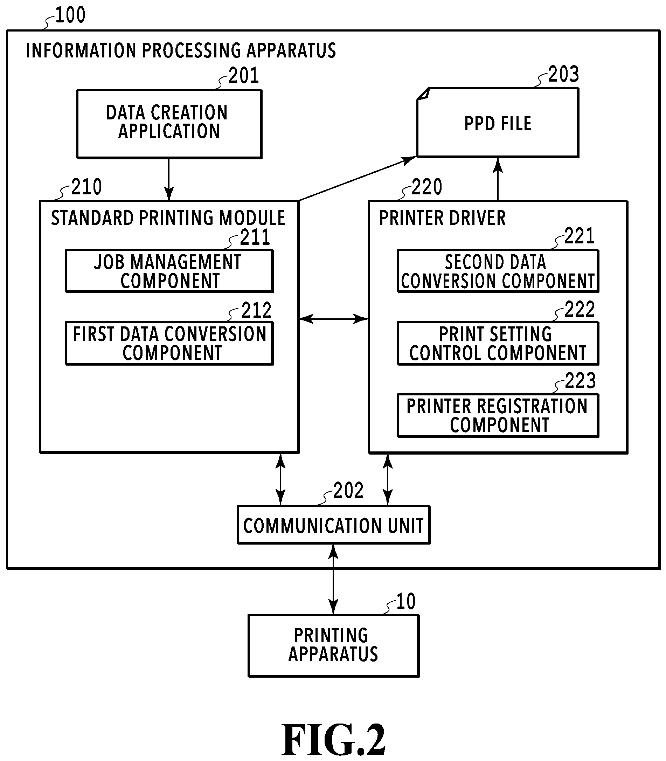

Fig. 2 is a diagram illustrating an example of a software configuration of the information processing apparatus. The information processing apparatus 100 includes a data creation application 201, the standard printing module 210, the printer driver 220, a communication unit 202, and a PPD file 203. By including the above configuration, the information processing apparatus 100 can control a printing apparatus. Note that the CPU 101 implements the functions of the data creation application 201, the standard printing module 210, the printer driver 220, and the communication unit 202.

The data creation application 201 is application software for creating printing target files, such as documents and images, and is document creation software or spreadsheet software, for example. The data creation application 201 is configured to transmit a print job including a printing target file and print setting information to the standard printing module 210 in response to receiving a print instruction from the user.

The standard printing module 210 is a standard printing system included in the OS of the information processing apparatus 100 and is configured to perform print control on various printing apparatuses regardless of the vendor. The standard printing module 210 is configured to manage a print job passed from the data creation application 201 and pass it to the communication unit 202. In the present embodiment, the OS is assumed to be macOS (registered trademark), and the standard printing module 210 is assumed to be the Common UNIX Printing System (CUPS) (registered trademark).

The standard printing module 210 includes a job management component 211 and a first data conversion component 212. The job management component 211 performs a spooling process on the print job and passes the print job to the first data conversion component 212. The first data conversion component 212 converts the print job into a different format. The converted print job is transmitted to the printing apparatus 10 in a case where the printing apparatus 10 supports the format into which the print job is converted by the first data conversion component 212. The converted print job is passed to the printer driver 220 in a case where the printing apparatus 10 does not support the format into which the print job is converted by the first data conversion component 212.

The printer driver 220 is software for optimizing the transfer of print jobs from the information processing apparatus 100 to the printing apparatus 10, and is installed and used on the information processing apparatus 100. The printer driver 220 is configured to cooperate with the standard printing module 210 to convert a printing target file into a format that is interpretable by the printing apparatus 10.

The printer driver 220 includes a second data conversion component 221, a print setting control component 222, and a printer registration component 223. The second data conversion component 221 receives the print job from the first data conversion component 212, and converts the print job into a format interpretable by the printing apparatus 10 based on the print setting information. The converted print job is passed to the standard printing module 210. The print setting control component 222 performs user interface (UI) control on an advanced print setting window 400 (described later in detail) for configuring print settings on the data creation application 201. On the advanced print setting window 400 displayed on the display apparatus 110 by the print setting control component 222, the user designates various setting items for the printing of the printing target file. The printer registration component 223 performs control during the installation of the printer driver 220.

The communication unit 202 is configured to communicate with the printing apparatus 10. The communication unit 202 transmits the print job to the printing apparatus 10 and receives information from the printing apparatus 10.

The PPD file 203 is a specification description file for describing specification information indicating the specifications of the printing apparatus 10. More specifically, the PPD file 203 is a text-based file in which functions available on the printing apparatus 10 are defined as specifications. The PPD file 203 is created in the information processing apparatus 100 during the installation of the printer driver 220. The standard printing module 210 and the printer driver 220 refer to the PPD file 203 to recognize the functions supported by the printing apparatus 10. Incidentally, the term "specification information" is a designation used herein for convenience, and a different designation (e.g., "printer information," "printer status information," "printer attribute information," or the like) may be used instead.

The specification information on the printing apparatus 10 includes basic specification information and extended specification information. The basic specification information and the extended specification information each include multiple specification items each indicating a specification of the printing apparatus 10.

The basic specification information is information on model-specific standard functions. The basic specification information is written to the PPD file 203 by default during the installation of the printer driver 220. Examples of the specification items in the basic specification information include the vendor name and model name of the printing apparatus 10, the print sheet types and sizes, the sheet feeding methods, and the zoom settings supported by default, and so on.

The extended specification information is information on specific functions, unique settings, and the like of the printing apparatus 10. The extended specification information is stored in the secondary storage device (not illustrated) of the printing apparatus, for example. The extended specification information is obtained from the printing apparatus 10 and written to the PPD file 203 during the installation of the printer driver 220. In a case where the extended specification information cannot be obtained for some reason, only the basic specification information is written to the PPD file 203. Examples of the specification items in the extended specification information include a supported communication mode, an option mounting status, destination information, and medium lineup information.

The supported communication mode is information on whether the printing apparatus 10 supports a communication protocol capable of specific bi-directional communication. There is a case where, for example, no information is included as a supported communication mode in the basic specification information but HTTP is described in the extended specification information as a supported communication mode. In the case where HTTP is described in the PPD file 203 as a supported communication mode, the information processing apparatus 100 recognizes that bi-directional communication can be performed with the printing apparatus 10, and functions of the information processing apparatus 100 that involve bi-direction communication with the printing apparatus 10 become available. Examples of the above functions include obtaining information on the remaining amounts of inks in the printing apparatus 10 and displaying the information on the display apparatus 110.

The option mounting status is information on accessories mounted to the printing apparatus 10. For example, the option mounting status is information on the status of mounting an external component, such as a retrofit sheet feeding unit, and the status of equipment of an internal device, such as a secondary storage device.

The destination information is information on the buyer of the printing apparatus 10 or on the location to which it is to be exported, and is set to be, for example, Japan, North America, or Europe.

The medium lineup information is a lineup of print sheets corresponding to the location set in the destination information (destination). While a general-purpose medium lineup that is common to all destinations is included in the basic specification information, obtaining the extended specification information adds sheet types corresponding to the destination as options for the print sheet. The general-purpose medium lineup is, for example, plain paper, photographic paper, coated paper, fine art paper, proofing paper, and so on. In a case where the destination is Japan, obtaining the extended specification information may add "postcard" and "glossy postcard" to the medium lineup information in the PPD file 203. Also, in a case where the destination is the U.S., obtaining the extended specification information may add "premium raster photography paper" and "matte coated paper" to the medium lineup information in the PPD file 203.

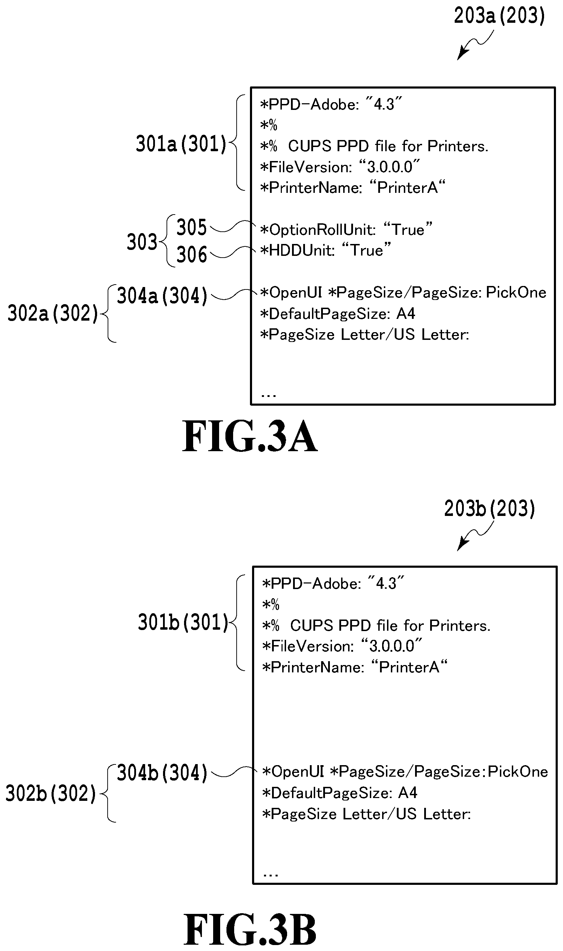

Figs. 3A and 3B are diagrams illustrating examples of part of the PPD file. Fig. 3A is an example of a PPD file including basic specification information and extended specification information. Fig. 3B is an example of a PPD file including no extended specification information.

The contents described in a PPD file 203a (203) illustrated in Fig. 3A include a header portion 301a (301), a basic specification information portion 302a (302), and an extended specification information portion 303. In the header portion 301a (301), the version of the PPD format, the version of the file, and the model name of the printing apparatus 10 are described among the specification items in the basic specification information. In the basic specification information portion 302a (302), the specification items in the basic specification information that are not included in the header portion 301a (301) (e.g., a sheet size definition 304 and the like) are described. In the extended specification information portion 303, the extended specification information is described. In the example of Fig. 3A, the extended specification information portion 303 includes option roll unit support information 305 and secondary storage device equipment information 306 as specification items. Here, the setting value of the option roll unit support information 305 is "True," indicating that an option roll sheet feeding unit is mounted to the printing apparatus 10. Also, the setting value of the secondary storage device equipment information 306 is "True," indicating that the printing apparatus 10 is equipped with a secondary storage device.

On the other hand, the contents described in the PPD file 203b (203) illustrated in Fig. 3B include a header portion 301b (301) and a basic specification information portion 302b (302) and includes no extended specification information portion. The contents of the header portion 301b and the basic specification information portion 302b are the same as those of the header portion 301a and the basic specification information portion 302a.

In response to the printer driver 220 referring to the PPD file 203a, in which the basic specification information and the extended specification information on the printing apparatus 10 are all described as illustrated in Fig. 3A, all functions of the printing apparatus 10 become available to the user. Specifically, in response to the printer driver 220 reflecting the contents described in the PPD file 203a in the advanced print setting window 400 on the data creation application 201, the user becomes able to designate print settings in detail.

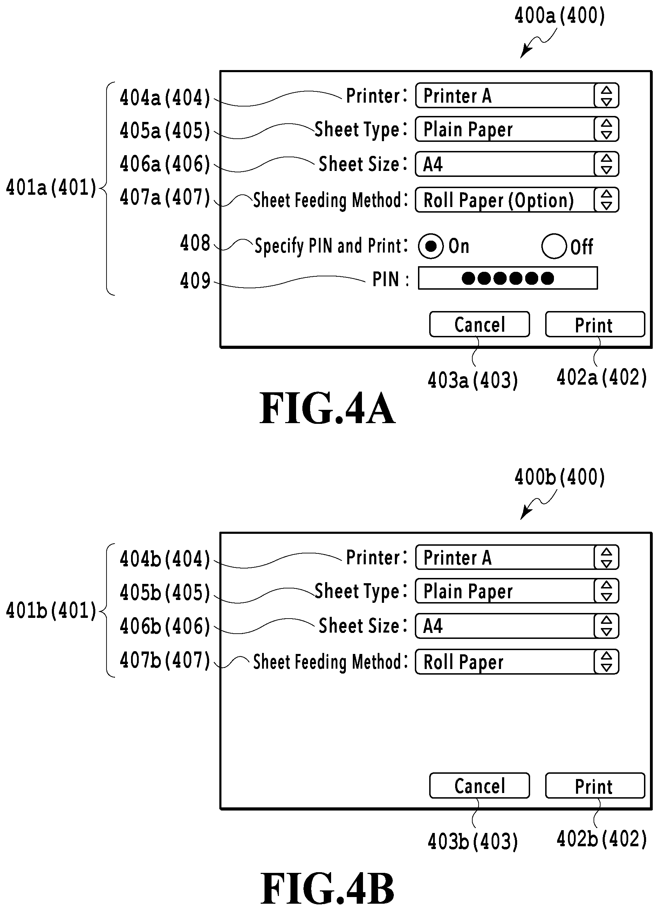

Figs. 4A and 4B are diagrams illustrating examples of the advanced print setting window. The advanced print setting window 400 (400a, 400b) is a window for configuring the print settings of a printing target file created by the data creation application 201 to create a print job. The advanced print setting window 400 is controlled by the printer driver 220.

A sequence up to a point where the advanced print setting window 400 is displayed on the display apparatus 110 will now be described. First, in response to activation of the data creation application 201, the standard printing module 210 and the printer driver 220 are activated as well. In a case where the user selects a print menu on the data creation application 201, a print setting window (not illustrated) controlled by the standard printing module 210 is firstly launched and displayed on the display apparatus 110. The print setting window is a window on which print settings can be configured using standard functions supported by the standard printing module 210. On the print setting window, a menu for launching the advanced print setting window 400 is displayed. In response to receiving an instruction to launch the advanced print setting window 400, the printer driver 220 loads the PPD file 203 and reflects the functions of the printing apparatus 10 described in the PPD file 203 in the advanced print setting window 400.

On the advanced print setting window 400, print setting items 401, a print button 402, and a cancel button 403 are displayed. In a case where the user configures the print setting items 401 and presses the print button 402, a print job is issued. The setting values of the print setting items 401 are included as print setting information in the print job and passed to the standard printing module 210 from the data creation application 201. In a case where user presses the cancel button 403 instead of pressing the print button 402, no print job is issued and the advanced print setting window 400 is closed.

In the examples of Figs. 4A and 4B, the print setting items 401 include a printer menu 404, a print sheet type menu 405, a print sheet size menu 406, and a sheet feeding method menu 407. With the printer menu 404, a printing apparatus registered in the information processing apparatus 100 can be selected. With the print sheet type menu 405, the print sheet size menu 406, and the sheet feeding method menu 407, the print sheet type, size and feeding method defined in the PPD file 203 can be selected, respectively. Incidentally, print setting items 401 that are not described in the present embodiment may be displayed on the advanced print setting window 400.

Fig. 4A illustrates an advanced print setting window 400a (400) in a case where the PPD file 203a illustrated in Fig. 3A is loaded. On the advanced print setting window 400a, "Roll Sheet (Option)" is selected in a sheet feeding method menu 407a. This option can be selected from the sheet feeding method menu 407a because the setting value of the option roll unit support information 305 is "True" in the PPD file 203a in Fig. 3a.

In the example of Fig. 4A, print setting items 401a (401) further include a personal identification number (PIN) printing menu 408 and a PIN input field 409. These are displayed on the advanced print setting window 400a because the setting value of the secondary storage device equipment information 306 is "True" in the PPD file 203a. The term "PIN printing" refers to a function that allows for secure printing of data saved in the secondary storage device of the printing apparatus 10 by inputting a PIN set in the PIN input field 409 into the operation unit 15 of the printing apparatus 10. That is, PIN printing is a function available only in a case where the printing apparatus 10 is equipped with a secondary storage device. In the example of Fig. 4A, whether to execute PIN printing is set by selecting "On" or "Off." PIN printing is executed in a case where the user presses the print button 402a with "On" selected in the PIN printing menu 408 and a PIN input in the PIN input field 409.

Fig. 4B illustrates an advanced print setting window 400b (400) in a case where the PPD file 203b illustrated in Fig. 3B is loaded. Print setting items 401b (401) on the advanced print setting window 400b include a printer menu 404b (404), a print sheet type menu 405b (405), a print sheet size menu 406b (406), and a sheet feeding method menu 407b (407). Neither the PIN printing menu nor the PIN input field is displayed because no secondary storage device equipment information is described in the PPD file 203b as extended specification information. Moreover, "Roll Sheet (Option)" is not selectable in the sheet feeding method menu 407b because no option roll unit support information is described in the PPD file 203b, and "Roll Sheet" defined in the basic specification information is selected. As described above, in a case where no extended specification information is described in the PPD file 203, only the standard functions defined in the basic specification information are reflected in the advanced print setting window 400.

### <Process of Registering Printing Apparatus in Information Processing Apparatus>

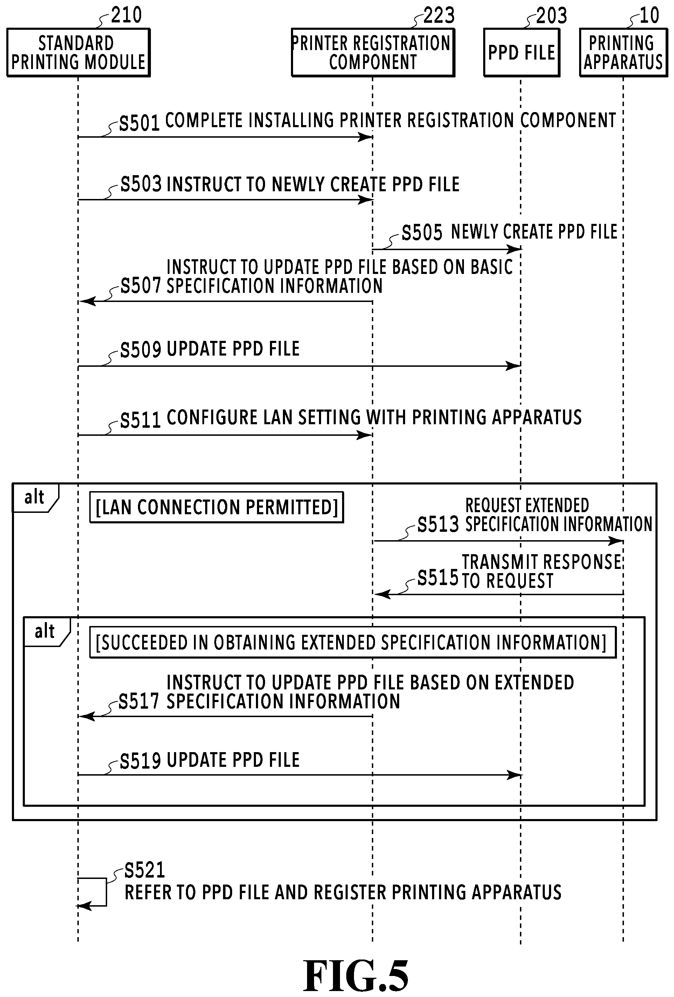

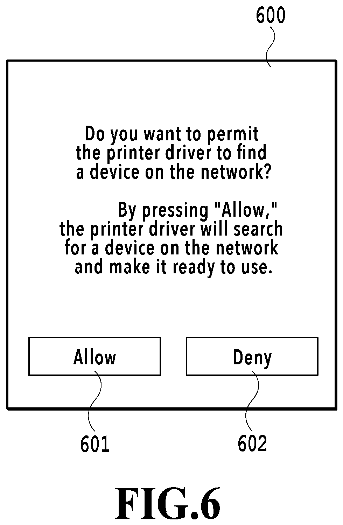

A process of registering the printing apparatus 10 during the installation of the printer driver 220 on the information processing apparatus 100 will now be described with reference to Figs. 5 to 7. Depending on the version of macOS assumed as the OS of the information processing apparatus 100 in the present embodiment, a connection setting dialog 600 as illustrated in Fig. 6 may be displayed during the installation of the printer driver 220. Without permitting a LAN connection with the printing apparatus 10 on the connection setting dialog 600, the extended specification information cannot be obtained from the printing apparatus 10. In the present embodiment, the procedure of the process in a case of displaying a dialog for setting whether to permit a LAN connection with the printing apparatus 10 during the installation of the printer driver 220 will be described.

Note that the symbol "S" in the following description means a step in a sequence chart or flowchart. Also, the process in the following sequence chart or flowchart is implemented by the CPU 101 of the information processing apparatus 100 reading out a program stored in the ROM 102, the storage device 104, or the like into the RAM 103 and executing it. Additionally, the functions of some or all of the steps in the following sequence chart or flowchart may be implemented by hardware such as an application-specific integrated circuit (ASIC) or an electronic circuit.

Fig. 5 is a sequence chart illustrating an example of a procedure for registering the printing apparatus in the information processing apparatus. Fig. 6 is a diagram illustrating an example of the connection setting dialog.

The sequence illustrated in Fig. 5 starts in a case where the printer driver 220 starts being installed on the information processing apparatus 100. First, in S501, the standard printing module 210 completes installing the printer registration component 223 of the printer driver 220. The printer driver 220 including the printer registration component 223 is saved to the storage device 104, for example. In S503, the standard printing module 210 instructs the printer registration component 223 to newly create a PPD file. In S505, the printer registration component 223 newly creates a PPD file 203. The PPD file 203 is saved to the storage device 104, for example.

In S507, the printer registration component 223 instructs the standard printing module 210 to update the PPD file 203 based on the basic specification information on the printing apparatus 10. The basic specification information is information which the printer registration component 223 holds by default without obtaining it from the printing apparatus 10, and is provided to the standard printing module 210 from the printer registration component 223. In S509, the standard printing module 210 updates the PPD file 203 by writing the basic specification information on the printing apparatus 10 to the PPD file 203.

In S511, the standard printing module 210 configures a LAN connection with the printing apparatus 10. The standard printing module 210 displays the connection setting dialog 600 for the user to set whether to permit a LAN connection with the printing apparatus 10 on the display apparatus 110. On the connection setting dialog 600, a message like "Do you want to permit the printer driver to find a device on the network? By pressing "Allow," the printer driver will search for a device on the network and make it ready to use.," a permit button 601, and a deny button 602 are displayed, as illustrated in Fig. 6. In a case where the user presses the permit button 601, a LAN connection with the printing apparatus 10 is permitted, thus allowing HTTP communication with the printing apparatus 10. In a case where the user presses the deny button 602, a LAN connection with the printing apparatus 10 is not permitted, thus not allowing HTTP communication with the printing apparatus 10. The setting on whether to permit a LAN connection based on the user operation is transferred to the printer registration component 223.

If a LAN connection is permitted in S511, the sequence proceeds to S513. If a LAN connection is not permitted, the sequence proceeds to S521.

In S513, the printer registration component 223 transmits a request for the extended specification information to the printing apparatus 10. In the present embodiment, the request is transmitted by HTTP communication via the communication unit 202.

In S515, the printing apparatus 10 transmits a response to the request for the extended specification information to the printer registration component 223. The printer registration component 223 receives the response from the printing apparatus 10 via the communication unit 202. If the printer registration component 223 succeeds in obtaining the extended specification information, the sequence proceeds to S517. If the printer registration component 223 fails to obtain the extended specification information, the sequence proceeds to S521. The printer registration component 223 determines that it has succeeded in obtaining the extended specification information, for example, in a case where any response is obtained from the printing apparatus 10 within a predetermined time since the transmission of the request for the extended specification information in S513. On the other hand, the printer registration component 223 determines that it has failed to obtain the extended specification information in a case where, for example, no response is obtained within the predetermined time since the transmission of the request for the extended specification information. The cause of the failure to obtain the extended specification information may be a malfunction of the network connecting the information processing apparatus 100 and the printing apparatus 10, the printing apparatus 10 being offline, or the like.

In S517, the printer registration component 223 instructs the standard printing module 210 to update the PPD file 203 based on the extended specification information obtained in S515. In S519, the standard printing module 210 updates the PPD file 203 by writing the extended specification information on the printing apparatus 10 provided from the printer registration component 223 to the PPD file 203. In S521, the standard printing module 210 performs a process of referring to the PPD file 203 and registering the printing apparatus 10 in the information processing apparatus 100. This ends the sequence of Fig. 5.

In the case where a LAN connection with the printing apparatus 10 is not permitted in S511 or the extended specification information cannot be obtained from the printing apparatus 10 for some reason in S515, no extended specification information is written to the PPD file 203. As a result, a PPD file 203b as illustrated in Fig. 3B is obtained.

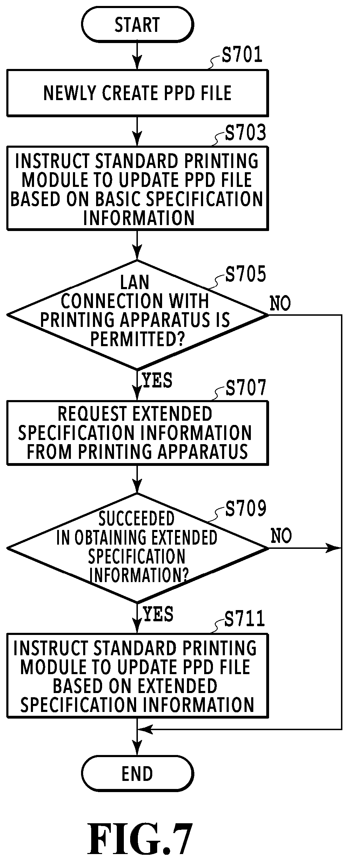

Fig. 7 is a flowchart illustrating an example of operation of the printer registration component in a case of registering the printing apparatus in the information processing apparatus. In the following description, the entity that performs the operations in the flowchart is the printer registration component 223 but may be the CPU 101 in practice.

The flowchart of Fig. 7 starts in a case where the printer registration component 223 receives an instruction to newly create a PPD file from the standard printing module 210 in S503. In S701, the printer registration component 223 newly creates a PPD file 203. S701 corresponds to S505. In S703, the printer registration component 223 instructs the standard printing module 210 to update the PPD file 203 based on the basic specification information on the printing apparatus 10. S703 corresponds to S507.

In S705, the printer registration component 223 determines whether a LAN connection with the printing apparatus 10 is permitted. If the standard printing module 210 has notified that a LAN connection is permitted on the connection setting dialog 600 (YES in S705), the printer registration component 223 proceeds to S707. If the standard printing module 210 has notified that a LAN connection is not permitted (NO in S705), the printer registration component 223 terminates the flowchart.

In S707, the printer registration component 223 transmits a request for the extended specification information to the printing apparatus 10. S707 corresponds to S513.

In S709, the printer registration component 223 determines whether it has succeeded in obtaining the extended specification information from the printing apparatus 10. S709 corresponds to S515. If having succeeded in obtaining the extended specification information (YES in S709), the printer registration component 223 proceeds to S711. If having failed to obtain the extended specification information (NO in S709), the printer registration component 223 terminates the flowchart.

In S711, the printer registration component 223 instructs the standard printing module 210 to update the PPD file 203 based on the obtained extended specification information. S711 corresponds to S517.

Thereafter, the printer registration component 223 terminates the flowchart. As described above, the printer registration component 223 is configured to be capable of registering the printing apparatus 10 in the information processing apparatus 100 without performing communication for obtaining the extended specification information.

### <Method of Obtaining Extended Specification Information>

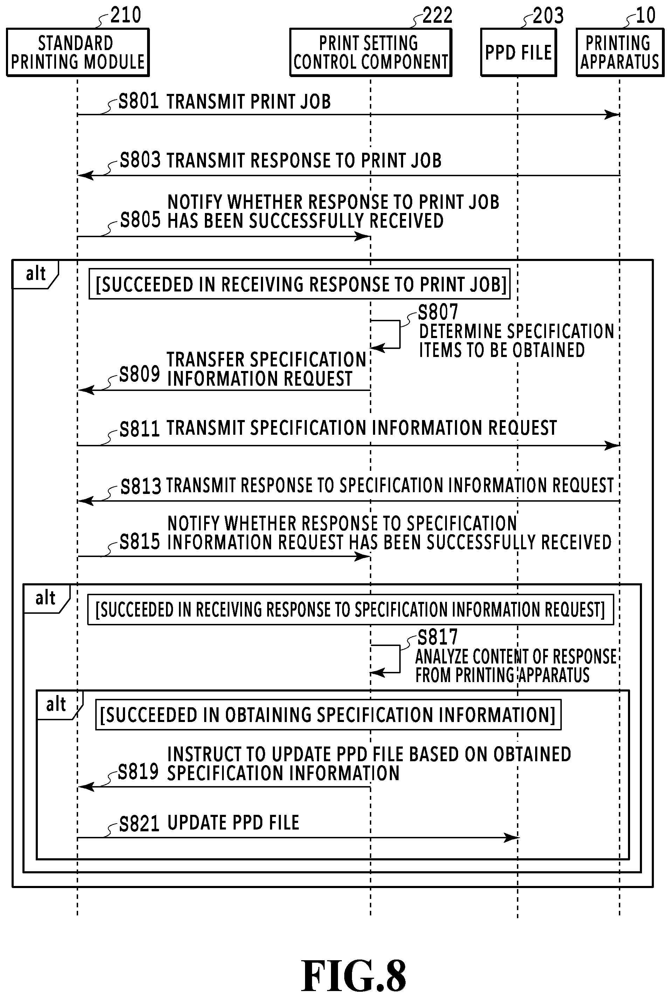

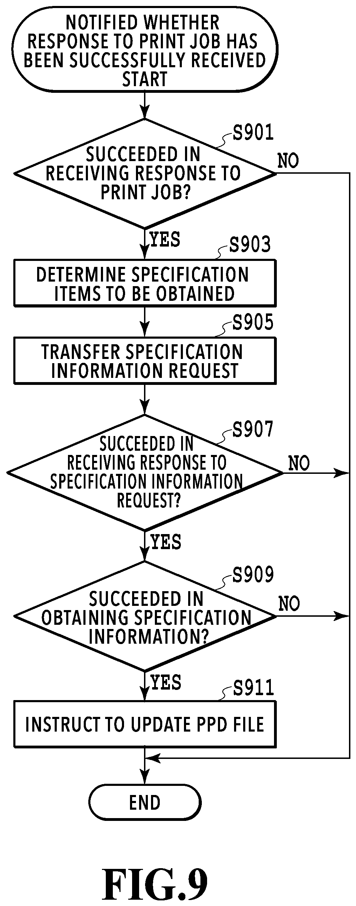

Here, even in a case where the printing apparatus 10 is successfully registered in the information processing apparatus 100, some of the functions of the printing apparatus 10 will not be displayed on the advanced print setting window 400 as illustrated in Fig. 4B if no extended specification information is included in the PPD file 203. In this case, the user cannot fully utilize the functions of the printing apparatus 10. To address this, the information processing apparatus 100 obtains the extended specification information in a case of transmitting a print job to the printing apparatus 10. A method of obtaining the extended specification information will be described below with reference to Figs. 8 and 9.

Fig. 8 is a sequence chart illustrating an example of the method of obtaining the extended specification information. In the present embodiment, the print setting control component 222 performs control to obtain the extended specification information from the printing apparatus 10. The standard printing module 210 and the printing apparatus 10 communicate by Internet Printing Protocol (IPP) communication, but may communicate in accordance with a communication protocol other than IPP.

The sequence illustrated in Fig. 8 starts in a case where the standard printing module 210 completes a preparation for transmission of a print job. In S801, the standard printing module 210 transmits the print job to the printing apparatus 10. In S803, the printing apparatus 10 transmits a response to the print job to the standard printing module 210.

In S805, the standard printing module 210 notifies the print setting control component 222 whether it has received the response to the print job from the printing apparatus 10. The standard printing module 210 determines that it has succeeded in receiving the response if any response is obtained from the printing apparatus 10 within a predetermined time since the transmission of the print job in S801, and determines that it has failed to receive the response if no response is obtained within the predetermined time. Alternatively, the standard printing module 210 may execute S801 again if the response from the printing apparatus 10 is not received within the predetermined time after the execution of S801. Moreover, the standard printing module 210 may determine that it has failed to receive the response if it executes S801 a predetermined number of times but does not receive the response from the printing apparatus 10. If the standard printing module 210 succeeds in receiving the response, the sequence proceeds to S807. If the standard printing module 210 fails to receive the response, the sequence ends. Succeeding in receiving the response means that the information processing apparatus 100 and the printing apparatus 10 are in a state where they can communicate with each other, and the possibility of succeeding in obtaining the extended specification information from the printing apparatus 10 is considered high. Accordingly, a process for obtaining the extended specification information starts at S807.

In S807, the print setting control component 222 determines specification items to be obtained from the extended specification information, and creates a specification information request. Details of the specification information request will be described later. In S809, the print setting control component 222 transfers the created specification information request to the standard printing module 210. In S811, the standard printing module 210 transmits the specification information request to the printing apparatus 10. In S813, the printing apparatus 10 transmits a response to the specification information request to the standard printing module 210.

In S815, the standard printing module 210 notifies the print setting control component 222 whether it has received the response to the specification information request from the printing apparatus 10. If having succeeded in receiving the response, the standard printing module 210 notifies the print setting control component 222 of the content of the response as well. As in S805, the standard printing module 210 may determine that it has succeeded in receiving the response if any response is obtained from the printing apparatus 10 within a predetermined time since the execution of S811, and determine that it has failed to receive the response if no response is obtained within the predetermined time. Alternatively, the standard printing module 210 may execute S811 again if the response from the printing apparatus 10 is not received within the predetermined time after the execution of S811. Moreover, the standard printing module 210 may determine that it has failed to receive the response if it executes S811 a predetermined number of times but does not receive the response from the printing apparatus 10 within the predetermined time. If the standard printing module 210 succeeds in receiving the response, the sequence proceeds to S817. If the standard printing module 210 fails to receive the response, the sequence ends.

In S817, the print setting control component 222 analyzes the provided content of the response from the printing apparatus 10. If the content of the response from the printing apparatus 10 includes the specification items determined in S807, the print setting control component 222 determines that the standard printing module 210 has succeeded in obtaining the specification information, and the sequence proceeds to S819. If the content of the response does not include the specification items determined in S807, the print setting control component 222 determines that the standard printing module 210 has failed to receive the specification information, and the sequence ends.

In S819, the print setting control component 222 instructs the standard printing module 210 to update the PPD file 203 based on the obtained specification information. In S821, the standard printing module 210 updates the PPD file 203 by writing the specification information obtained in S813 to the PPD file 203. This ends the sequence.

Fig. 9 is a flowchart illustrating an example of the operation of the print setting control component in the method of obtaining the extended specification information. A trigger to start the flowchart is the standard printing module 210 notifying the print setting control component 222 whether the standard printing module 210 has received a response to a print job from the printing apparatus 10.

In S901, the print setting control component 222 determines whether the standard printing module 210 has received a response from the printing apparatus 10. If the standard printing module 210 has succeeded in receiving a response (YES in S901), the print setting control component 222 proceeds to S903. If the standard printing module 210 has failed to receive a response (NO in S901), the flowchart ends.

In S903, the print setting control component 222 determines specification items to be obtained from the extended specification information, and creates a specification information request. S903 corresponds to S807. In S905, the print setting control component 222 passes the specification information request to the standard printing module 210. S905 corresponds to S809.

In S907, the print setting control component 222 determines whether the standard printing module 210 has received a response from the printing apparatus 10. S907 corresponds to S815.

In S909, the print setting control component 222 analyzes the content of the response from the printing apparatus 10 and determines whether the standard printing module 210 has succeeded in obtaining the specification information required of the printing apparatus 10. S909 corresponds to S817. If the standard printing module 210 has succeeded in obtaining the specification information (YES in S909), the print setting control component 222 proceeds to S911. If the standard printing module 210 has failed to obtain the specification information (NO in S909), the flowchart ends.

In S911, the print setting control component 222 instructs the standard printing module 210 to update the PPD file 203 based on the obtained specification information. S911 corresponds to S819. This ends the flowchart.

As a supplementary description, the display of the advanced print setting window 400 before and after the obtaining of the extended specification information is summarized.

First, a description will be given of the advanced print setting window 400 in a case of creating the first print job to be transmitted to the printing apparatus 10 after registering the printing apparatus 10 in the information processing apparatus 100 without performing communication for obtaining the extended specification information. On the advanced print setting window 400 in this case, the setting items 401 based on the extended specification information (e.g., the PIN printing menu 408 and the PIN input field 409) are not displayed.

Moreover, on the advanced print setting window 400 in a case of creating a next print job different from the first print job after transmitting the first print job to the printing apparatus, the setting items 401 based on the extended specification information are displayed.

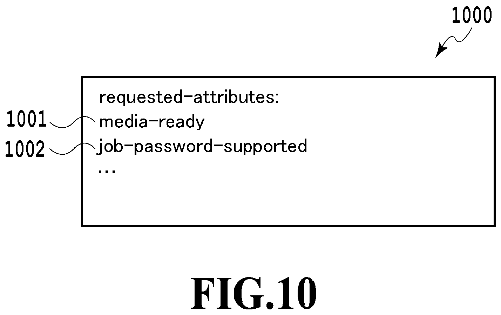

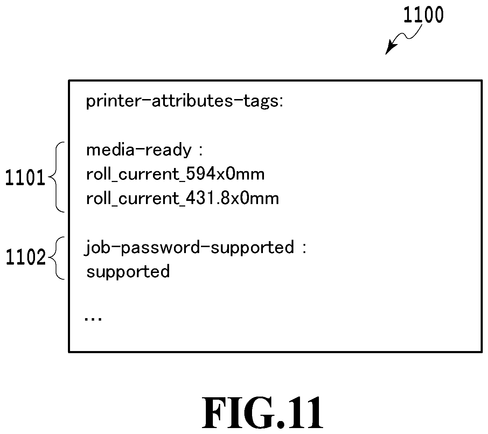

Specific contents of a specification information request and a response to the specification information request will now be described with reference to Figs. 10 and 11.

Fig. 10 is a diagram illustrating an example of part of a specification information request. Fig. 11 is a diagram illustrating an example of part of a response to the specification information request. In the present embodiment, the standard printing module 210 obtains printer attributes from the printing apparatus 10 using a Get-Printer-Attributes request defined in IPP. With a Get-Printer-Attributes request, it is possible to request the printing apparatus 10 to transmit various printer attributes of the printing apparatus 10.

Fig. 10 is part of a specification information request 1000, i.e., part of a Get-Printer-Attributes request. Specification items 1001 and 1002 to be obtained from the printing apparatus 10 are designated as the attribute values of the "requested-attributes" attributes included in the Get-Printer-Attributes request.

The specification item 1001 is information on a print sheet that has been set at the sheet feeding port and ready to be used for printing, and is defined under the name "media-ready."

The specification item 1002 is information on whether the printing apparatus 10 supports PIN printing, and is defined under the name "job-password-supported."

Fig. 11 illustrates part of a response 1100 to the specification information request 1000, i.e., part of a Get-Printer-Attributes response.

In the example of Fig. 11, two types of results, namely "roll_current_594x0mm" and "roll_current_431.8x0mm" are obtained as a returned result 1101 for the specification item 1001. This indicates that a roll sheet with a width of 594 mm and a roll sheet with a width of 431.8 mm have been set at the sheet feeding port of the printing apparatus 10. A second roll sheet feeding unit as an option may be mountable to the printing apparatus 10 depending on the model, and the returned result 1101 indicates that multiple roll sheets have been set on the printing apparatus 10, that is, a second roll sheet feeding unit has been mounted. Incidentally, in a case where only one type, e.g., "roll_current_594x0mm," is obtained as the returned result 1101 for the specification item 1001, it means that no option roll sheet feeding unit is mounted to the printing apparatus 10.

In the example of Fig. 11, a result "supported" is obtained as a returned result 1102 for the specification item 1002. This indicates that the printing apparatus 10 supports PIN printing. As described earlier, PIN printing is a function that can be used only in a case where the printing apparatus 10 is equipped with a secondary storage device. That is, the returned result 1102 indicates that the printing apparatus 10 is equipped with a secondary storage device. Meanwhile, no request result may be returned for the specification item 1002, or a returned result "unsupported" may be obtained. This means that the printing apparatus 10 does not support PIN printing, that is, the printing apparatus 10 is not equipped with a secondary storage device.

In the specification information request 1000 illustrated in Fig. 10, one type of attribute value is designated for each of the specification items to be obtained from the printing apparatus 10. Note that a Get-Printer-Attributes request can be described to request all attribute values of the printing apparatus 10 instead of designating individual attribute values, requesting only attribute values to be obtained as illustrated in Fig. 10 can shorten the processing time.

Nonetheless, the specification information request 1000 may still be described to request all specification items that can be obtained from the printing apparatus 10 instead of designating individual the specification items to be obtained. This is because, in a situation where, for example, the extended specification information could not be obtained from the printing apparatus 10 during the installation of the printer driver 220, transmitting the first print job to the printing apparatus 10 requires obtaining all specification items that can be obtained as the extended specification information.

Meanwhile, the specification items in the extended specification information include unchangeable specification items whose setting values are unchangeable, and changeable specification items whose setting values are changeable. Examples of the unchangeable specification items include the status of equipment of an internal device, such as a secondary storage device, in the printing apparatus 10. Examples of the changeable specification items include the status of mounting of an external component, such as a retrofit sheet feeding unit, to the printing apparatus 10.

The unchangeable specification items, whose setting values do not change in the printing apparatus 10, do not need to be obtained from the printing apparatus 10 again once they are successfully obtained from the printing apparatus 10. In other words, the print setting control component 222 is configured not to include the unchangeable specification items as targets for a request to obtain the extended specification information once the unchangeable specification items are written to the PPD file 203.

On the other hand, the changeable specification items, whose setting values may be changed in the printing apparatus 10 as a result of, for example, dismounting the mounted sheet feeding unit, may be obtained from the printing apparatus 10 on a regular basis. That is, once the extended specification information is successfully obtained from the printing apparatus 10, only the changeable specification items may be designated as obtaining targets in a next or subsequent specification information request 1000.

Also, since the changeable specification items may be changed, a process of obtaining the extended specification information may be executed after a print job is executed also in a case where the extended specification information is successfully obtained from the printing apparatus 10 during the installation of the printer driver 220.

In the case of performing a process of obtaining the extended specification information after a print job is executed as illustrated in Figs. 8 and 9, it will take a slightly longer time to complete the processing than in a case of executing only the print job. Thus, in consideration of user convenience, the printer driver 220 may be configured to display an obtaining request permission menu for designating whether to issue a request to obtain the extended specification information on the advanced print setting window 400. In this case, a process of obtaining the specification information is executed after execution of the print job only in a case where the user designates issuing of a request to obtain the extended specification information.

The printer driver 220 may be configured such that, in a case where the extended specification information is successfully obtained after execution of the print job, the printer driver 220 does not issue a request to obtain the extended specification information after execution of a print job until a predetermined time elapses from the obtaining of the extended specification information. The above configuration is also directed to improving user convenience. The printer driver 220 may be configured to record in the PPD file 203 the last date and time of issuance of a request to obtain the extended specification information, and not to create a specification information request until a predetermined time elapses. The predetermined time in this case is 1 week, for example.

As described above, according to the present embodiment, the specification information on the printing apparatus can be appropriately reflected in the information processing apparatus. Even in a case where the extended specification information cannot be obtained from the printing apparatus during the installation of the printer driver, the extended specification information can be obtained in a case where a print job is executed. In this way, the functions of the printing apparatus defined in the extended specification information can be reflected in the advanced print setting window, allowing the user to fully utilize the functions of the printing apparatus.

### <<Second Embodiment>>

A second embodiment differs from the first embodiment in that the extended specification information is obtained by referring to a response to a print job. In the present embodiment, the hardware configurations and software configurations of the information processing apparatus 100 and the printing apparatus 10 are similar to those in the first embodiment. In the following description, common components to those in the first embodiment will be denoted by the same reference signs, and description thereof will be omitted, and the second embodiment will be described focusing on its difference from the first embodiment.

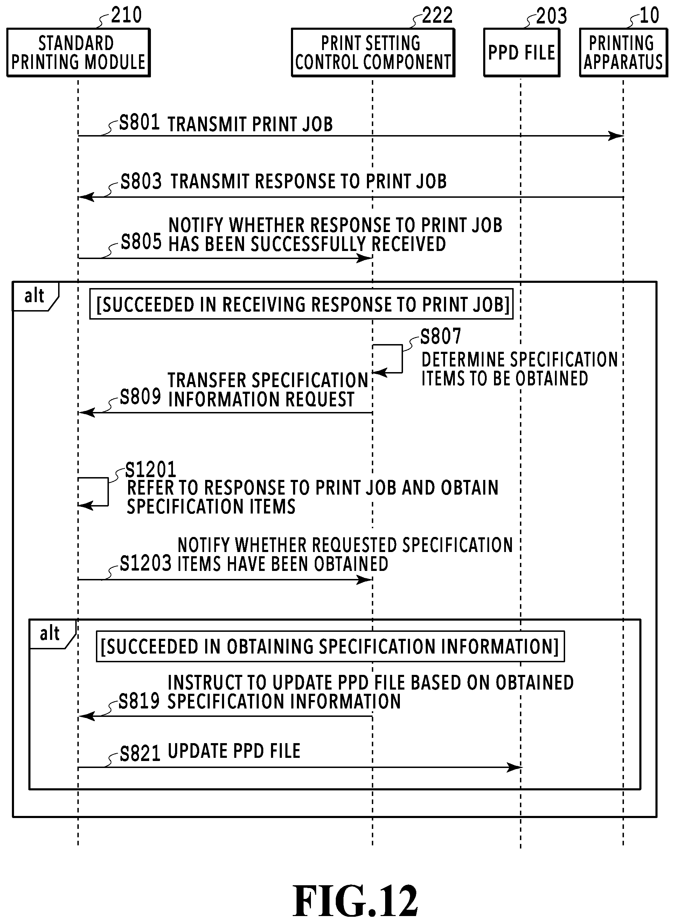

Fig. 12 is a sequence chart illustrating an example of a method of obtaining the extended specification information. As in Fig. 8, the sequence illustrated in Fig. 12 starts in a case where the standard printing module 210 completes a preparation for transmission of a print job. S801 to S809 are similar to those in Fig. 8, and description thereof will therefore be omitted.

In a case where the standard printing module 210 successfully receives a response to the print job from the printing apparatus 10 in S803, the content of that response is temporarily cached in the information processing apparatus 100. Also, the response to the print job includes the extended specification information on the printing apparatus 10.

In S1201, the standard printing module 210 searches the response to the print job cached in the information processing apparatus 100 for the specification items included in the specification information request transmitted from the print setting control component 222 in S809.

In S1203, the standard printing module 210 notifies the print setting control component 222 of the result of the search in S1201. If the standard printing module 210 has succeeded in obtaining the specification items from the response to the print job, the sequence proceeds to S819. If the standard printing module 210 has failed to obtain the specification items, the sequence ends. S819 and S821 after this are similar to those in Fig. 8.

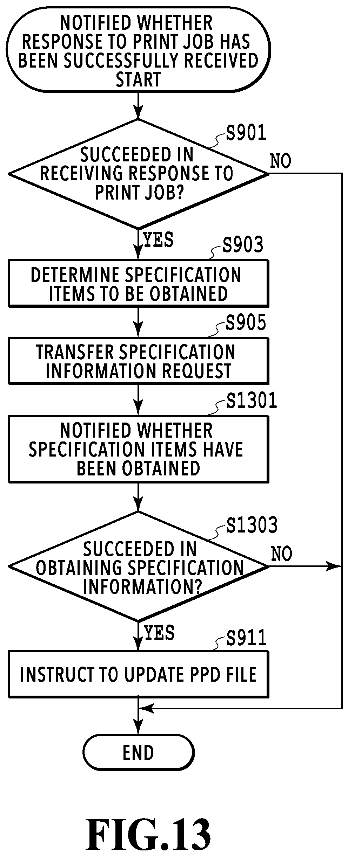

Fig. 13 is a flowchart illustrating an example of the operation of the print setting control component in the method of obtaining the extended specification information. As in Fig. 9, a trigger to start the flowchart is the standard printing module 210 notifying the print setting control component 222 whether the standard printing module 210 has received a response to a print job from the printing apparatus 10. S901 to S905 are similar to those in Fig. 9, and description thereof will therefore be omitted.

In S1301, the print setting control component 222 is notified by the standard printing module 210 whether the standard printing module 210 has succeeded in obtaining the specification items requested to be obtained. S1301 corresponds to S1203.

In S1303, the print setting control component 222 analyzes the content of the notification in S1301 and determines whether the standard printing module 210 has succeeded in obtaining the specification items requested to be obtained. If the standard printing module 210 has succeeded in obtaining the specification items requested to be obtained, the print setting control component 222 proceeds to S911. If the standard printing module 210 has failed to obtain the specification items requested to be obtained, the flowchart ends. S911 is similar to that in Fig. 9.

According to the present embodiment, communication with the printing apparatus for obtaining the extended specification information does not occur. Accordingly, a process of obtaining the extended specification information can be completed in a shorter time.

In the embodiments described above, a PC has been described as an example of an information processing apparatus to which the present invention is applicable, but this information processing apparatus is not limited to this example. The present invention is applicable to information processing apparatuses and electronic apparatuses that control a printing apparatus. Specifically, the present invention is applicable to personal digital assistants (PDAs), mobile phones, such as smartphones, tablets, game consoles, electronic book readers, head-mounted displays, and so on.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (100) for controlling a printing apparatus (10), the information processing apparatus comprising:
a registration unit (223) configured to be capable of registering the printing apparatus in the information processing apparatus without performing communication for obtaining specification information indicating a specification of the printing apparatus;
a first control unit (222) configured to perform control to issue a request to obtain the specification information on the printing apparatus in response to receiving a response to a print job transmitted to the printing apparatus; and
a second control unit (222) configured to perform control to update a specification description file (203) based on the specification information obtained in response to the obtaining request to thereby reflect the specification information in an advanced print setting screen (400) for creating a print job on the information processing apparatus, the specification description file being a file for describing the specification information.

2. The information processing apparatus according to claim 1, wherein
the information processing apparatus is configured to display a connection setting dialog for a user to set whether to permit a local area network (LAN) connection with the printing apparatus in a case of registering the printing apparatus in the information processing apparatus, and
in a case where a setting for not permitting a LAN connection with the printing apparatus is set on the connection setting dialog, the registration unit registers the printing apparatus in the information processing apparatus without performing communication for obtaining the specification information.

3. The information processing apparatus according to claim 1, wherein
the information processing apparatus is configured to display a connection setting dialog for a user to set whether to permit a LAN connection with the printing apparatus in a case of registering the printing apparatus in the information processing apparatus, and
in a case where a setting for permitting a LAN connection with the printing apparatus is set on the connection setting dialog, the registration unit performs communication for obtaining the specification information with the printing apparatus and updates the specification description file based on the specification information obtained from the printing apparatus.

4. The information processing apparatus according to claim 2 or 3, wherein
the information processing apparatus comprises a standard printing module being a standard printing system included in an operating system (OS), and
the standard printing module displays the connection setting dialog.

5. The information processing apparatus according to claim 4, wherein the OS is macOS (registered trademark).

6. The information processing apparatus according to any one of claims 1 to 5, wherein the first control unit performs control to transmit the request to obtain the specification information to the printing apparatus.

7. The information processing apparatus according to claim 4, wherein the first control unit issues the request to obtain the specification information to the standard printing module.

8. The information processing apparatus according to any one of claims 1 to 7, wherein
the specification information includes first specification information,
a setting item based on the first specification information is not displayed on the advanced print setting screen in a case of creating a first print job being a print job to be transmitted first to the printing apparatus after the registration unit registers the printing apparatus in the information processing apparatus without performing communication for obtaining the specification information, and
the setting item based on the first specification information is displayed on the advanced print setting screen in a case of creating a second print job different from the first print job after the first print job is transmitted to the printing apparatus.

9. The information processing apparatus according to any one of claims 1 to 8, wherein the request to obtain the specification information is issued to the printing apparatus by Internet Printing Protocol (IPP) communication.

10. The information processing apparatus according to any one of claims 1 to 9, wherein
the specification information includes a plurality of specification items each indicating a specification of the printing apparatus, and
as each of the specification items being targets of the request to obtain the specification information, one type of specification item is designated.

11. The information processing apparatus according to claim 10, wherein
the specification items of the specification information include a first specification item whose setting value is unchangeable, and
the first control unit performs control to not include the first specification item as a target for the request to obtain the specification information once the first specification item is written to the specification description file.

12. The information processing apparatus according to any one of claims 1 to 11, wherein the second control unit displays options for designating whether to issue the request to obtain the specification information on the advanced print setting screen.

13. The information processing apparatus according to any one of claims 1 to 12, wherein in a case where the specification information is successfully obtained, the first control unit does not issue the request to obtain the specification information until a predetermined time elapses from the obtaining of the specification information.

14. The information processing apparatus according to any one of claims 1 to 13, wherein the specification description file is a PostScript (registered trademark) Printer Description (PPD) file.

15. An information processing method for an information processing apparatus (100) for controlling a printing apparatus (10), the information processing method comprising:
performing control to issue a request to obtain specification information indicating a specification of the printing apparatus in response to receiving a response to a print job transmitted to the printing apparatus; and
performing control to update a specification description file (203) based on the specification information obtained in response to the obtaining request to thereby reflect the specification information in an advanced print setting screen (400) for creating a print job on the information processing apparatus, the specification description file being a file for describing the specification information.

16. A program which when loaded into an information processing apparatus and executed allows the information processing apparatus to function as units as claimed in any one of claims 1 to 14.

17. A storage medium storing a program which when loaded into an information processing apparatus and executed allows the information processing apparatus to function as units as claimed in any one of claims 1 to 14 and is readable by the information processing apparatus.
